# EUROPÄISCHE PATENTSCHRIFT

(11) **EP 1 835 257 B1**
(45) Veröffentlichungstag und Bekanntmachung des Hinweises auf die Patenterteilung: **12.05.2010**
(21) Anmeldenummer: 07005143.8
(22) Anmeldetag: 13.03.2007
(51) Int. Cl.: G01B 11/06, G01N 21/21

(54) **Verfahren zur Bestimmung der Auflage auf einem bewegten Metallband**
Method for determining the overlay on moving metal tape
Procédé destiné à la détermination du revêtement sur une bande métallique mobile

(30) Priorität: 14.03.2006 DE 10612022
(43) Veröffentlichungstag der Anmeldung: 19.09.2007
(73) Patentinhaber: Betriebsforschungsinstitut VDEh Institut für angewandte Forschung GmbH, 40042 Düsseldorf (DE)
(72) Erfinder: Krannich, Stephan, 40470 Düsseldorf (DE); Woeste, Werner, 40883 Ratingen (DE)
(74) Vertreter: Tilmann, Max Wilhelm

(56) Entgegenhaltungen:
- EP-A2- 0 300 508
- JP-A- 3 291 510
- JP-A- 5 322 549
- US-A- 2004 252 306
- US-A- 2005 179 897
- BARTON D ET AL: "Toward a priori selection of ellipsometry angles and wavelengths using a high performance semantic database" THIN SOLID FILMS, ELSEVIER-SEQUOIA S.A. LAUSANNE, CH, Bd. 313-314, Februar 1998 (1998-02), Seiten 119-123, XP004131614 ISSN: 0040-6090
- YOU-SHENG LIN: "Spectroscopic Ellipsometry (Sopra GES 5)" 10. Oktober 2004 (2004-10-10), XP007907299 UCLA Nanoelectronic Facility

## Beschreibung

Die Erfindung betrifft ein Verfahren zur Bestimmung der Auflage auf einem bewegten Metallband und nimmt die Priorität der deutschen Patentanmeldung 10 2006 012 022.1 in Anspruch.

Die Bandsauberkeit ist beispielsweise bei metallischen und organischen Beschichtungsprozessen ein Schlüssel-Parameter. Um eine gleichbleibend gute Bandoberflächenqualität zu erzielen, ist es daher notwendig, Verschmutzungen beispielsweise durch Öl, Kohlenstoff- und Eisenabrieb durch geeignete Meßsysteme zu erfassen und gezielte Gegenmaßnahmen einzuleiten. Neben der Bandsauberkeit, d. h. dem Entfernen von Öl und Eisenabrieb in Reinigungslinien vor der Bandbeschichtung, ist auch der umgekehrte Fall von Bedeutung, nämlich beispielsweise die lückenlose Beölung von Weißblechband mit Ölauflage im Nanometerbereich. Auch hierfür ist es notwendig, die Ölauflage zu messen und bei Abweichungen von den Zielgrößen gezielte Gegenmaßnahmen einzuleiten.

Aus der Praxis ist es bekannt, optische Materialeigenschaften oder die Dicke dünner Schichten mittels der Ellipsometrie zu bestimmen. Die theoretischen Vorteile der Methode sind die hohe Empfindlichkeit, die zerstörungs- und sogar berührungsfreie Messung. In der Praxis hat es sich jedoch gezeigt, daß diese Vorteile nicht ohne weiteres in allen Anwendungsgebieten erzielt werden können. So hat es sich insbesondere auf dem Gebiet der Untersuchung rasch bewegter Metallbänder, die häufig in einer Umgebung mit starker Wasser- und Nebelbildung behandelt werden, als schwierig erwiesen, mit den herkömmlichen Verfahren brauchbare Messergebnisse zu erzielen. Hinzu kommt, daß Metallbänder in großindustriellen Anlagen in der Regel mit Bandgeschwindigkeiten von 50 bis 3000 m/min. bewegt werden, so daß auch an die Auswerteeinheiten solcher Ellipsometer hohe Anforderungen gestellt werden, um eine Online-Darstellung der ermittelten Ergebniswerte überhaupt zu ermöglichen.

Aus der EP 0 300 508 A2 ist ein Verfahren zur Bestimmung eines durchsichtigen Films auf einer durchsichtigen Glasoberfläche bekannt. Bei diesem Verfahren wird ein einwelliger Lichtstrahl eines Einwellen-Ellipsometers in einem Winkel ALPHA auf die zu untersuchende Glasoberfläche gesendet. Der von der Oberfläche reflektierte Lichtstrahl wird in einem Lichtteiler (Beamsplitter) in vier Lichtstrahlen zerteilt. Jeder einzelne Lichtstrahl wird von einem ihm zugeordneten Detektor aufgenommen. In einer Auswerteeinheit werden aus den Messsignalen der Detektoren die ellipsometrischen Kenngrößen PHI und DELTA ermittelt. Anschließend wird die zu bestimmende Dicke d mit der festgelegten Umrechnungsfunktion d=K Δ aus der ellipsometrischen Kenngröße DELTA berechnet.

Vor diesem Hintergrund liegt der Erfindung die Aufgabe zugrunde, ein Verfahren zur Bestimmung der Auflage auf einem bewegten Metallband vorzuschlagen, das mit einfachen Mitteln eine Online-Bestimmung erlaubt.

Diese Aufgabe wird durch das Verfahren gemäß Anspruch 1 gelöst. Vorteilhafte Ausführungsformen sind in den abhängigen Ansprüchen angegeben.

Die Erfindung geht von dem Grundgedanken aus, an dem jeweiligen Meßort lediglich ein einziges sogenanntes Einwellen-Ellipsometer einzusetzen. Mit dem erfindungsgemäßen Verfahren lassen sich dadurch auf dem Einsatzgebiet der Bestimmung der Auflage auf einem bewegten Metallband genaue Meßergebnisse erzielen. Ferner ist ein Einwellen-Ellipsometer deutlich günstiger als sogenannte Mehrwellen-Ellipsometer und auch im Aufbau weniger kompliziert und damit weniger störanfällig. Ebenso bietet der Einsatz eines einzigen Einwellen-Ellipsometers an einem Meßort einen weiteren Kostenvorteil gegenüber der Verwendung mehrerer Ellipsometer an einem Meßort.

Bei der Auswertung des mittels eines Detektors des Einwellen-Ellipsometers aufgenommenen, von der zu untersuchenden Oberfläche reflektierten Lichtstrahls wird aus diesem Meßsignal in einer Auswerteeinheit mindestens eine ellipsometrische Kenngröße, insbesondere bevorzugt die so genannte ellipsometrische Größe Winkel DELTA und/oder Winkel PSI ermittelt.

Das erfindungsgemäße Verfahren sieht zur Bestimmung der Auflage auf einem bewegten Metallband in einem ersten Schritt das Senden eines einwelligen Lichtstrahls eines Einwellen-Ellipsometers in einem Winkel Alpha zu der Flächennormalen der zu untersuchenden Oberfläche auf die zu untersuchende Oberfläche vor. In einem zweiten Schritt wird ein von der Oberfläche reflektierter Lichtstrahl von einem Detektor des Einwellen-Ellispometers aufgenommen. Anschließend wird in einer Auswerteeinheit aus einer ellipsometrischen Kenngröße, beispielsweise dem so genannten Winkel DELTA oder Winkel PSI, des reflektierten Lichtstrahls ein Meßwert ermittelt. Dieser Meßwert ist proportional zu der zu bestimmenden Schichtdicke der Auflage. Um aus dem Meßwert einen absoluten Ergebniswert zu erzeugen, sieht das erfindungsgemäße Verfahren vor, daß von der Auswerteeinheit auf Grundlage mindestens eines Auswahlfaktors aus einer Mehrzahl von in einer Datenbank abgelegten Umrechnungsfunktionen eine Umrechnungsfunktion und/oder ein Parameter für eine Umrechnungsfunktion ausgewählt wird und der Meßwert mittels der ausgewählten Umrechnungsfunktion in einen Ergebniswert umgerechnet wird. Ein Auswahlfaktor für eine Umrechnungsfunktion ist einer der nachfolgend genannten Parameter
- Temperatur des Bandes,
- Informationen aus einer Voranlage, wie zum Beispiel einem vorgeschalteten Glühprozeß (Hauben- bzw. Durchlaufglühofen),
- Informationen über durch die Vorbehandlung entstandene Eigenschaften, wie beispielsweise die Härte, Festigkeit und Korngröße,
- Informationen über die Vorbehandlungsschichten, wie beispielsweise Phosphatierung, Chromatierung, chromfreie No-Rinse-Vorbehandlungschichten,
- Bandgeschwindigkeit.

Es hat sich gezeigt, daß die Auflage mit einem einzigen Einwellen-Ellipsometer in der für das Anwendungsgebiet notwendigen Präzision bestimmt werden kann. Es hat sich jedoch auch gezeigt, daß Einflußfaktoren, wie beispielsweise die Rauheit des Bandes, das Verhältnis des Meßwerts zum absoluten Ergebniswert beeinflussen. Deshalb schlägt die Erfindung vor, in einer Datenbank eine Mehrzahl von Umrechnungsfunktionen abzulegen und abhängig von mindestens einem Auswahlfaktor, beispielsweise der Bandtemperatur, die Umrechnungsfunktion für die durchzuführende Umrechnung des Meßwerts in einen Ergebniswert auszuwählen, die den vorhandenen Bedingungen am ehesten entspricht. Die in der Datenbank abgelegten Umrechnungsfunktionen können in Probeläufen durch Vergleich der aus dem Winkel DELTA und/oder PSI in der Auswerteeinheit ermittelten Meßwerten mit den Ergebniswerten anderer Meßmethoden für die Oberflächenrauhigkeit oder die Auflage eines Bandes erzeugt werden. Ferner kann die Auswerteeinheit als selbstlernendes System ausgebildet sein und die abgelegten Umrechnungsfunktionen mit zunehmender Zahl der bearbeiteten Prozesse selbständig anpassen.

In einer ergänzenden oder alternativen Ausführungsform des Grundgedankens der Erfindung wird auf Grundlage mindestens eines Auswahlfaktors für eine bevorzugt ebenfalls aufgrund des Auswahlfaktors ausgewählte oder alternativ fest vorgegebene Umrechnungsfunktion mindestens ein Parameter ausgewählt. Die eingesetzten Umrechnungsfunktionen können beispielsweise Polynom- bzw. Geraden-Funktionen sein, deren Steigung als Parameter auf Grundlage von Auswahlfaktoren ausgewählt werden kann.

In einer bevorzugten Ausführungsform des Verfahrens wird der Lichtstrahl in einem festgelegten Winkel zwischen 50 bis 80° Grad zur Oberflächennormalen auf die zu untersuchende Oberfläche gesendet. Besonders bevorzugt wird der Lichtstrahl jedoch in einem Winkel von 60° Grad zur Oberflächennormalen auf die zu untersuchende Oberfläche gesendet. Zwar wird bei ellipsometrischen Verfahren davon ausgegangen, daß die größte Meßgenauigkeit bei einem Einstrahlwinkel von 70° Grad zur Oberflächennormalen realisiert werden; es hat sich jedoch gezeigt, daß nach dem erfindungsgemäßen Verfahren auch bei einem Einstrahlwinkel von 60° Grad oder weniger hinreichend genaue Meßergebnisse erzielt werden. Die Wahl des Einstrahlwinkels von 60° Grad bringt aber den zusätzlichen Vorteil, daß die Strahlenquelle weiter beabstandet vom Band angeordnet werden kann. Dadurch wird das Risiko verringert, daß die Strahlenquelle durch ein stark bewegtes Band oder den stark bewegten Bandanfang oder das stark bewegte Bandende berührt und beschädigt wird.

Gemäß einer bevorzugten Ausführungsform kann der Lichtstrahl eine Wellenlänge von 632,8 nm haben und wird vorzugsweise von einem He-Ne-Laser erzeugt.

In einer bevorzugten Ausführungsform mißt der Detektor den reflektierten Lichtstrahl mit einer Meßrate von 10 Hz bis 1 kHz, insbesondere bevorzugt von 20 bis 50Hz und ganz besonders bevorzugt 33 Hz. Es hat sich gezeigt, daß bei den auf dem Anwendungsgebiet üblichen Bandgeschwindigkeiten von 50 bis 3000 m/min. mit einer derartigen Abtastrate hinreichend genaue Online-Meßwerte erzeugt werden können. Die Meßrate kann jedoch zur Präzisierung der Meßmethode erhöht werden.

Die in der Auswerteeinheit aus der ellipsometrischen Kenngröße des reflektierten Lichtstrahls ermittelten Meßwerte können stark schwanken. Es hat sich jedoch gezeigt, daß trotz stark schwankender Meßwerte der Mittelwert dieser Meßwerte eine sehr zuverlässige Information über die zu bestimmende Auflage enthält. In einer bevorzugten Ausführungsform der Erfindung ermittelt die Auswerteeinheit den Meßwert deshalb als Mittelwert aus mindestens zehn Werten der aus den einzelnen Messungen des Detektors ermittelten ellipsometrischen Kenngröße, beispielsweise den Winkel DELTA-Werten, wobei die Auswerteeinheit besonders bevorzugt einen Mittelwert aus hundert Werten bildet.

Die Genauigkeit der von dem erfindungsgemäßen Verfahren erzeugten Ergebniswerte steigt mit der Zahl der zu berücksichtigenden Auswahlfaktoren und der dazugehörigen Zahl der in der Datenbank abgelegten Umrechnungsfunktionen. Die Auswahlfaktoren für eine Umrechnungsfunktion können beispielsweise ein erster Auswahlfaktor sein, der einer der nachfolgend genannten Parameter ist:
- Temperatur des Bandes,
- Informationen aus Voranlage, wie zum Beispiel vorgeschaltete Glühprozeß (Hauben- bzw. Durchlaufglühofen),
- Informationen über durch die Vorbehandlung entstandene Eigenschaften, wie beispielsweise die Härte, Festigkeit und Korngröße,
- Informationen über die Vorbehandlungsschichten, wie beispielsweise Phosphatierung, Chromatierung, chromfreie No-Rinse-Vorbehandlungschichten,
- Bandgeschwindigkeit. und ein zweiter Auswahlfaktor, der einer der nachfolgenden genannten Parameter ist:

- Bandobertlächenstruktur (Rauhigkeit, Textur),
- Materialeigenschaft der Bandauflage bzw. Bandverschmutzung, wie beispielsweise Kohlenwasserstoffe, Kohlenstoff (organisch, anorganisch). Öl-, Rostschutz-, Emulsion, Oxide, Eisenabrieb, Partikel, Öl-Eisenverbindungen (Eisenseifen),
- Materialeigenschaften des Bandes, wie beispielsweise die Art des Materials, also beispielsweise ob es sich um Stahl, Edelstahl, Weißblech (Stahl-Feinstblech, verzinnt bzw. verchromt), Aluminium, Kupfer und sonstige Metalle handelt oder beispielsweise die Stahlmarke, Materialklasse oder Oberflächenkennzahl.
   Ferner können als weitere Auswahlfaktoren weitere der vorgenannten Parameter verwendet werden.

Die Art der zur Verfügungstellung des Auswahlfaktors kann vielfältig und gemischt sein. So kann ein Auswahlfaktor manuell in die Auswerteeinheit eingegeben werden, beispielsweise ein firmeninternes Stichwort für einen bestimmten Metalltyp bzw. einen bestimmten Behandlungsschritt. Alternativ oder ergänzend kann ein Auswahlfaktor aus einem Meßwert eines weiteren Meßgeräts ermittelt werden, wie beispielsweise der Meßwert eines Temperaturmeßgeräts. Das weitere Meßgerät kann jedoch auch ein weiteres Ellipsometer, insbesondere bevorzugt ein weiteres Einwellen-Ellipsometer sein, das an einem anderen Meßort installiert ist. Beispielsweise kann in einer Bandbehandlungsanlage ein erstes Einwellen-Ellipsometer kurz nach dem Bandeinlauf vorgesehen sein. Mit diesem ersten Einwellen-Ellipsometer werden erste Meßwerte aus einer ellipsometrischen Kenngröße, beispielsweise dem Winkel DELTA des reflektierten Lichtstrahls für das erste Einwellen-Ellipsometer bestimmt. Diese ersten Meßwerte können Grundlage für die Auswahl der Umrechnungsfunktion in einer Auswerteeinheit eines zweiten Einwellen-Ellipsometers sein, das nach der Bandbehandlungsanlage installiert ist. Die ausgewählte Umrechnungsfunktion kann als Einflußgröße dann beispielsweise auch das Meßergebnis des ersten Einwellen-Ellipsometers haben.

In einer weiter bevorzugten Ausführungsform kann ein Auswahlfaktor aus einer Datenbank für Prozeßabläufe ausgelesen werden. Bandbehandlungsanlagen, in denen das Verfahren zur Bestimmung der Auflage Anwendung finden kann, werden häufig nach so genannten Stichplänen betrieben. In dem Stichplan ist beispielsweise angegeben, welches Band zu welchem Zeitpunkt von der Bandbehandlungsanlage behandelt wird. Die Auswerteeinheit kann für die Auswahl der Umrechnungsfunktion auf diese Informationen zurückgreifen.

In einer bevorzugten Ausführungsform wird der Auswahlfaktor auf Grundlage der Messung des Detektors und/oder auf Grundlage des in der Auswerteeinheit ermittelten Meßwerts, beispielsweise also auch auf Grundlage eines gemittelten Werts, ermittelt.

Die in der Datenbank abgelegten Umrechnungsfunktionen können einfache Kalibrierwerte sein. In einer bevorzugten Ausführungsform ist die Umrechnungsfunktion ein Polynom, wobei auch andere Umrechnungsfunktionen eingesetzt werden können.

In einer bevorzugten Ausführungsform wird der Ergebniswert durch Synchronisierung mit einer Information über die Bandposition einer bestimmten Bandposition zugeordnet. Dies ermöglicht es, dem Prozeßleitsystem oder der grafischen Anzeige der Ergebniswerte die zusätzliche Information beizugeben, an welcher Stelle des Bandes der gerade eingespeiste bzw. gerade angezeigte Ergebniswert vorliegt.

Es hat sich gezeigt, daß das erfindungsgemäße Verfahren besonders gute Ergebnisse erzielt, wenn der Lichtstrahl auf einen Bereich des Metallbandes gerichtet wird, in dem das Metallband auf einer Rolle aufliegt. Dies führt zu einer Stabilisierung des Bandes und damit einer geringeren Schwankung der aus der ellipsometrischen Kenngröße des reflektierten Lichtstrahls ermittelten Werte.

Die Quelle des Lichtstrahls, beispielsweise der Laser, und/oder der Detektor können fest installiert oder beispielsweise senkrecht zur Bandlaufrichtung in Bandbreitenrichtung traversierend ausgebildet sein. Durch ein Traversieren über die Bandbreite kann mit dem erfindungsgemäßen Verfahren die Bandauflage über die gesamte Bandbreite gemessen werden.

Das erfindungsgemäße Verfahren wird bevorzugt zur Ermittlung einer Oberflächenauflage bei einer Trägerrauhigkeit mit einem Rauhigkeitswert von 0,05 bis 4 Mikrometer Ra eingesetzt. Es hat sich gezeigt, daß das vorgeschlagene Verfahren bei diesen Rauhigkeitswerten besonders gute Ergebnisse erzielt.

Ferner wird das Verfahren gemäß einer bevorzugten Ausführungsform zur Ermittlung einer Bandauflage mit einer Schichtdicke von 1 bis 100 nm verwendet. Auch hier hat es sich gezeigt, daß die durch das erfindungsgemäße Verfahren ermittelten Ergebniswerte in diesem Schichtdickenbereich besonders präzise sind.

Das erfindungsgemäße Verfahren kann zur Bestimmung der Auflage auf einem bewegten Metallband eingesetzt werden, bei der das Metallband mit einer Geschwindigkeit von 50 bis 3000 m/min. bewegt wird. Die einfachen Auswerteschritte des erfindungsgemäßen Verfahrens ermöglichen es, auch bei diesen Bandgeschwindigkeiten eine für das Einsatzgebiet ausreichende Präzision zur Verfügung zu stellen.

Nachfolgend wird die Erfindung anhand einer lediglich ein Ausführungsbeispiel darstellenden Zeichnung näher erläutert. Darin zeigen:
- Fig.1: eine schematische Seitenansicht eines Endabschnitts einer Bandbehandlungsanlage und
- Fig. 2: den Aufbau des erfindungsgemäß eingesetzten Einwellen-Ellipsometers in einer schematischen Seitenansicht.

Dargestellt sind ein erstes Einwellen-Ellipsometer 1, das oberhalb eines Bands 2 angeordnet ist, das im Bereich des Einwellen-Ellipsometers 1 über eine Rolle 3 geführt wird. Ein zweites Einwellen-Ellipsometer 4 ist auf die Unterseite des Bands 2 gerichtet, das im Bereich des zweiten Einwellen-Ellipsometers 4 über eine Rolle 5 geführt wird.

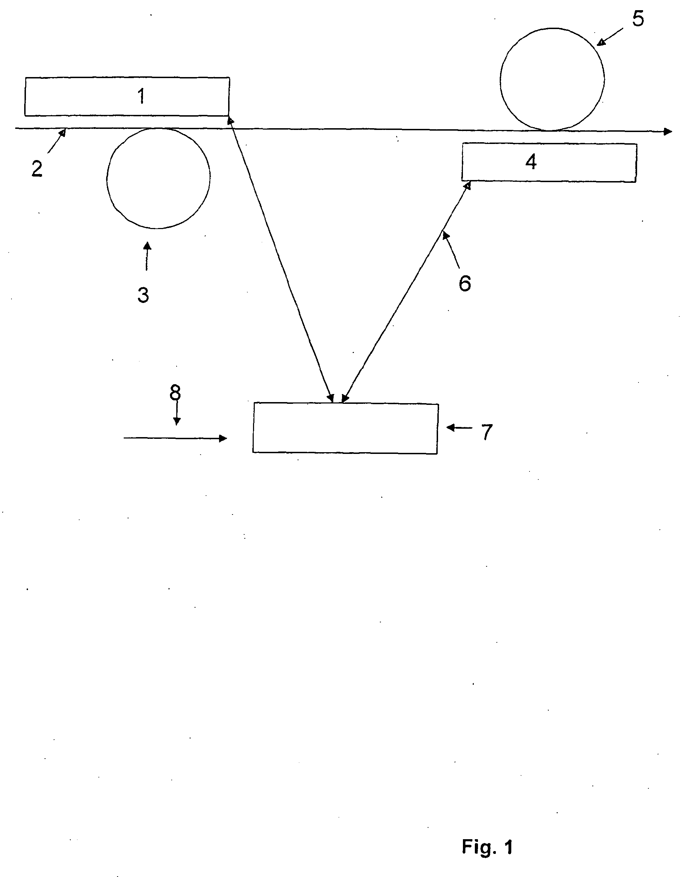

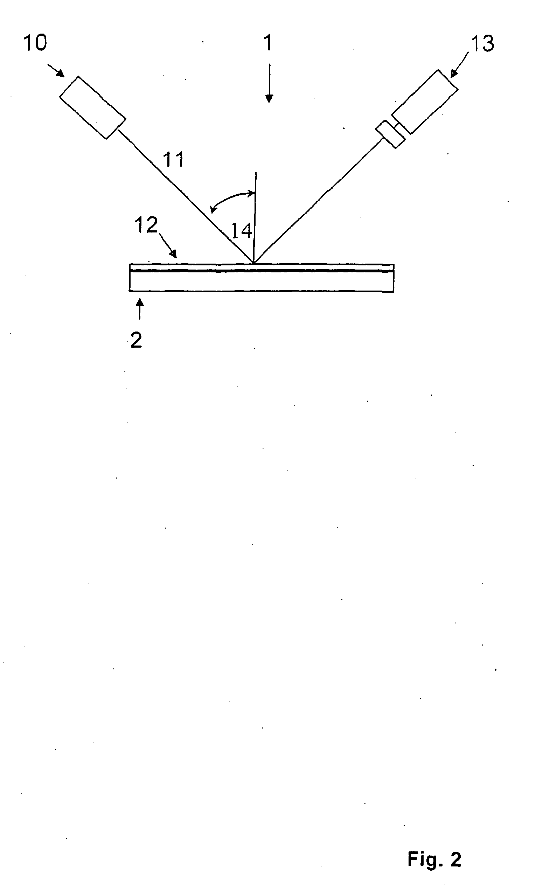

Fig. 2 zeigt den Einwellen-Laser 10 des Einwellen-Ellipsometers 1, von dem ein einwelliger Lichtstrahl 11 in einem Winkel 14, insbesondere 60°, auf die zu untersuchende Oberfläche des Bands 2 gesendet wird. In der Fig. 2 ist die Bandauflage 12 des Bands 2 dargestellt, deren Dicke mit dem erfindungsgemäßen Verfahren ermittelt wird. Der Lichtstrahl wird von der Oberfläche des Bandes reflektiert und von einem von einem Detektor 13 des Einwellen-Ellipsometers aufgenommen. Die von dem Detektor ermittelten Signal werden über eine Datenleitung 6 (Fig. 1) einer Auswerteeinheit 7 zugeführt. Die Auswerteeinheit ermittelt aus den ellipsometrischen Kenngrößen DELTA und/oder PSI des reflektierten Lichtstrahls einen Meßwert. Aufgrund eines über eine weitere Leitung 8 zugeführten Auswahlfaktors wählt die Auswerteeinheit aus einer Mehrzahl von in einer Datenbank abgelegten Umrechnungsfunktionen eine Umrechnungsfunktion aus und rechnet den Meßwert mittels der ausgewählten Umrechnungsfunktion in einen Ergebniswert um.

## Patentansprüche

1. Verfahren zur Bestimmung der Auflage auf einem bewegten Metallband, bei dem:
- ein einwelliger Lichtstrahl eines Einwellen-Ellipsometers (1; 4) in einem Winkel ALPHA auf die zu untersuchende Oberfläche des bewegten Metallbands gesendet wird,
- ein von der Oberfläche reflektierter Lichtstrahl (11) von einem Detektor (13) des Einwellen-Ellipsometers (1; 4) aufgenommen und daraus ein Meßsignal erzeugt wird,
- in einer Auswerteeinheit (7) aus dem Meßsignal des Detektors mindestens eine ellipsometrische Kenngröße des reflektierten Lichtstrahls (11) als ein Meßwert ermittelt wird,
- von der Auswerteeinheit (7) auf Grundlage mindestens eines Auswahlfaktors aus einer Mehrzahl von in einer Datenbank abgelegten Umrechnungsfunktionen eine Umrechnungsfunktion ausgewählt wird, indem auf Grundlage mindestens eines Auswahlfaktors die Umrechnungsfunktion selbst oder ein Parameter einer fest vorgegebenen Umrechnungsfunktion oder eine Umrechnungsfunktion und ein Parameter für diese Umrechnungsfunktion ausgewählt wird,
- der Meßwert mittels der ausgewählten Umrechnungsfunktion in einen Ergebniswert umgerechnet wird, wobei
der mindestens eine Auswahlfaktor für die Auswahl der Umrechnungsfunktion einer der nachfolgend genannten Parameter ist:
- Temperatur des Bandes,
- Informationen aus einer Voranlage, wie zum Beispiel einem vorgeschalteten Glühprozeß in einem Hauben- bzw. Durchlaufglühofen,
- Informationen über durch die Vorbehandlung entstandene Eigenschaften, wie beispielsweise die Härte, Festigkeit und Korngröße,
- Informationen über die Vorbehandlungsschichten, wie beispielsweise Phosphatierung, Chromatierung, chromfreie No-Rinse-Vorbehandlungschichten,
- Bandgeschwindigkeit,
- ein aus einer Datenbank für Prozeßabläufe ausgelesener Parameter.

2. Verfahren nach Anspruch 1, wobei die Auswahl der Umrechnungsfunktion auf Grundlage von zwei Auswahlfaktoren erfolgt, wobei der erste Auswahlfaktor einer der nachfolgenden Parameter ist:
- Temperatur des Bandes,
- Informationen aus einer Voranlage, wie zum Beispiel vorgeschaltete Glühprozeß in einem Hauben- bzw. Durchlaufglühofen.
- Informationen über durch die Vorbehandlung entstandene Eigenschaften, wie beispielsweise die Härte, Festigkeit und Korngröße,
- Informationen über die Vorbehandlungsschichten, wie beispielsweise Phosphatierung, Chromatierung, chromfreie No-Rinse-Vorbehandlungschichten,
- Bandgeschwindigkeit,
- ein aus einer Datenbank für Prozeßabläufe ausgelesener Parameter, und wobei der zweite Auswahlfaktor einer der nachfolgenden Parameter ist:
- Bandoberflächenstruktur, wie etwa Rauhigkeit, Textur,
- Materialeigenschaft der Bandauflage bzw. Bandverschmutzung, wie beispielsweise Kohlenwasserstoffe, Kohlenstoff, Öl-, Rostschutz-, Emulsion, Oxide, Eisenabrieb, Partikel, Öl-Eisenverbindungen wie Eisenseifen,
- Materialeigenschaften des Bandes, wie beispielsweise die Art des Materials, also beispielsweise ob es sich um Stahl, Edelstahl, Weißblech, wie etwa Stahl-Feinstblech, verzinnt bzw. verchromt, Aluminium, Kupfer und sonstige Metalle handelt oder beispielsweise die Stahlmarke, Materialklasse oder Oberflächenkennzahl,

3. Verfahren nach Anspruch 1 oder 2, wobei in der Datenbank abgelegten Umrechnungsfunktionen in Probeläufen durch Vergleich der aus dem Winkel DELTA und/oder PSI in der Auswerteeinheit ermittelten Meßwerten mit den Ergebniswerten anderer Meßmethoden oder die Auflage des Bandes erzeugt werden.

4. Verfahren nach Anspruch 1 bis 3, wobei die Auswerteeinheit als selbstlemendes System ausgebildet ist und die abgelegten Umrechnungsfunktionen mit zunehmender Zahl der bearbeiteten Prozesse selbständig anpasst.

5. Verfahren nach einem der Ansprüche 1 bis 4, wobei der Lichtstrahl (11) in einem Winkel von 60° zur Oberflächennormalen auf die zu untersuchende Oberfläche gesendet wird.

6. Verfahren nach einem der Ansprüche 1 bis 5, wobei die Auswerteeinheit (7) den Meßwert als Mittelwert aus über 10 Werten von aus einzelnen Messungen des Detektors (13) ermittelten DELTA-Werten ermittelt.

7. Verfahren nach einem der Ansprüche 1 bis 6, wobei ein/der Auswahlfaktor manuell in die Auswerteeinheit (7) eingegeben wird.

8. Verfahren nach einem der Ansprüche 1 bis 7, wobei ein/der Auswahlfaktor aus einem Meßwert eines weiteren Meßgeräts ermittelt wird.

9. Verfahren nach einem der Ansprüche 1 bis 8, wobei ein/der Auswahlfaktor auf Grundlage der Messung des Detektors (13) und/oder auf Grundlage des in der Auswerteeinheit (7) ermittelten Meßwerts ermittelt wird.

10. Verfahren nach einem der Ansprüche 1 bis 9, wobei die ausgewählte Umrechnungsfunktion ein Polynom ist.

11. Verfahren nach einem der Ansprüche 1 bis 10, wobei der Ergebniswert durch Synchronisierung mit einer Information über die Bandposition einer bestimmten Bandposition zugeordnet wird.

12. Verfahren nach einem der Ansprüche 1 bis 11, wobei der Lichtstrahl (11) auf einen Bereich des Metallbands (2) gerichtet wird, in dem das Metallband (2) auf einer Rolle (3; 5) aufliegt.

13. Verwendung des Verfahrens nach einem der Ansprüche 1 bis 12 zur Ermittlung einer Bandauflage mit einer Schichtdicke von 1 bis 100 nm.

14. Verwendung des Verfahrens nach einem der Ansprüche 1 bis 12 zur Bestimmung der Auflage auf einem bewegten Metallband (2), bei der das Metallband (2) mit einer Geschwindigkeit von 50 bis 3000 m/min bewegt wird.

## Claims

1. Method for determining the surface layer on a moving metal strip, in which:
- a single-wavelength light beam of a monochromatic ellipsometer (1; 4) is transmitted at an angle α onto the surface to be inspected of the moving metal strip,
- a light beam (11), reflected by the surface, from a detector (13) of the monochromatic ellipsometer (1; 4) is recorded and a measuring signal is produced therefrom,
- at least one ellipsometric characteristic of the reflected light beam (11) is determined in an evaluation unit (7) as a measurement value from the measuring signal of the detector,
- a conversion function is selected from the evaluation unit (7) on the basis of at least one selection factor from a plurality of conversion functions stored in a database, with the conversion function itself, or a parameter of a permanently pre-set conversion function, or a conversion function and a parameter for this conversion function being selected on the basis of at least one selection factor,
- the measurement value is converted into a result value by means of the conversion function selected, wherein
the at least one selection factor for selecting the conversion function of one of the following parameters is:
- temperature of the strip,
- data from a previous stage, such as for example an upstream annealing process in a hood-type or continuous annealing furnace,
- data about properties, resulting from pre-treatment, such as for example hardness, strength and grain size,
- data about pre-treatment films, such as for example phosphating, chromating, chrome-free no rinse pre-treatment films,
- strip speed,
- a parameter selected from a database of process stages.

2. Method according to claim 1, wherein the conversion function is selected on the basis of two selection factors, wherein the first selection factor is one of the following parameters:
- temperature of the strip,
- data from a previous stage, such as for example an upstream annealing process in a hood-type or continuous annealing furnace,
- data about properties, resulting from pre-treatment, such as for example hardness, strength and grain size,
- data about pre-treatment films, such as for example phosphating, chromating, chrome-free no rinse pre-treatment films,
- strip speed,
- a parameter selected from a database of process stages
and wherein the second selection factor is one of the following parameters:
- strip surface structure, such as for instance roughness, texture,
- material property of the strip surface layer or strip contamination, such as for example hydrocarbons, carbon, oil-, rust-protection, emulsion, oxides, iron abrasion fines, particles, oil-iron compounds such as iron soaps,
- material properties of the strip, such as for example the type of metal, thus for example whether it concerns steel, stainless steel, tinplate, such as for instance light-gauge steel sheet, tinned or chromed, aluminium, copper and other metals or for example the steel brand, material class or surface code.

3. Method according to claim 1 or 2, wherein conversion functions stored in the database during test runs are produced by comparing the measurement values determined from the angle Δ and/or ψ in the evaluation unit with the result values of other test methods or the surface layer of the strip.

4. Method according to claims 1 to 3, wherein the evaluation unit is designed as self-learning system and the stored conversion functions, as the number increases, are automatically matched to the processes used.

5. Method according to any one of claims 1 to 4, wherein the light beam (11) is transmitted at an angle of 60° to the surface normal onto the surface to be inspected.

6. Method according to any one of claims 1 to 5, wherein the evaluation unit (7) determines the measurement value as an average of more than 10 Δ values determined from individual measurements of the detector (13).

7. Method according to any one of claims 1 to 6, wherein a/the selection factor is manually entered into the evaluation unit (7).

8. Method according to any one of claims 1 to 7, wherein a/the selection factor is determined from a measurement value of a further measurement instrument.

9. Method according to any one of claims 1 to 8, wherein a/the selection factor is determined on the basis of the measurement of the detector (13) and/or on the basis of the measurement value determined in the evaluation unit (7).

10. Method according to any one of claims 1 to 9, wherein the selected conversion function is a polynomial.

11. Method according to any one of claims 1 to 10, wherein the result value is assigned to a certain strip position by synchronisation with data about the strip position.

12. Method according to any one of claims 1 to 11, wherein the light beam (11) is directed onto an area of the metal strip (2), in which the metal strip (2) lies on a roller (3; 5).

13. Use of the method according to any one of claims 1 to 12 for determining a strip surface layer with a film thickness of 1 to 100 nm.

14. Use of the method according to any one of claims 1 to 12 for determining the surface layer on a moving metal strip (2), wherein the metal strip (2) is moved at a rate of 50 - 3000 metres per minute.

## Revendications

1. Procédé de détermination du revêtement sur une bande métallique en mouvement, dans lequel :
- un faisceau lumineux d'une seule longueur d'onde d'un ellipsomètre mono-longueur d'onde (1 ; 4) est envoyé sous un angle ALPHA sur la surface à analyser,
- un faisceau lumineux (11) réfléchi par la surface est reçu par un détecteur (13) de l'ellipsomètre mono-longueur d'onde (1 ; 4),
- dans une unité d'évaluation (7), au moins une grandeur caractéristique ellipsométrique du faisceau lumineux réfléchi (11) est déterminée comme une valeur de mesure à partir du signal de mesure du détecteur,
- une fonction de conversion est sélectionnée par l'unité d'évaluation (7) parmi une pluralité de fonctions de conversion stockées dans une base de donnés sur la base d'au moins un facteur de sélection, la fonction de conversion elle-même ou un paramètre d'une fonction de conversion prédéterminée ou une fonction de conversion et un paramètre pour cette fonction de conversion étant sélectionnés sur la base d'au moins un facteur de sélection,
- la valeur de mesure est convertie au moyen de la fonction de conversion sélectionnée en une valeur de résultat,
ledit au moins un facteur de sélection pour la sélection du la fonction de conversion étant un des paramètres suivants :
- température de la bande,
- des informations d'une installation en amont, comme par exemple d'un processus de recuit dans un four à recuit à cloche ou continu,
- des informations sur des propriétés résultant du traitement préalable, comme par exemple la dureté, la résistance mécanique et la taille de grain,
- des informations sur les couches de traitement préalable, comme par exemple phosphatation, chromatation, couches de traitement préalable sans chrome « no-rinse » (sans rinçage),
- vitesse de la bande,
- un paramètre lu dans une base de données pour cycles de processus.

2. Procédé selon la revendication 1, dans lequel la sélection de la fonction de conversion a lieu sur la base de deux facteurs de sélection, le premier facteur de sélection étant un des paramètres suivants :
- température de la bande,
- des informations d'une installation en amont, comme par exemple d'un processus de recuit dans un four à recuit à cloche ou continu.
- des informations sur des propriétés résultant du traitement préalable, comme par exemple la dureté, la résistance mécanique et la taille de grain,
- des informations sur les couches de traitement préalable, comme par exemple phosphatation, chromatation, couches de traitement préalable sans chrome « no-rinse » (sans rinçage),
- vitesse de la bande,
- un paramètre lu dans une base de données pour cycles de processus, et le deuxième facteur de sélection étant un des parcmètres suivants :
- structure superficielle de la bande, comme par exemple rugosité, texture,
- une propriété du matériau de revêtement de la bande ou de contamination de la bande, comme par exemple hydrocarbures, carbone, produit de protection contre l'huile, contre la rouille, émulsion, oxydes, résidus de fer, particules, composés d'huile et de fer tels que savon de fer,
- des propriétés du matériau de la bande, comme par exemple la nature du matériau, donc par exemple s'il s'agit d'acier, d'acier inoxydable, de fer-blanc, comme par exemple de tôle d'acier noire, étamés ou chromés, d'aluminium, de cuivre ou d'autres métaux ou par exemple la marque de l'acier, la classe de matière ou l'indice de surface.

3. Procédé selon la revendication 1 ou 2, dans lequel les fonctions de conversion stockées dans la base de données sont générées lors de courses d'essai par comparaison des valeurs de mesure détermineés dans l'unité d'évaluation à partir de l'angle ALPHA et/ou PSI avec les valeurs de résultat d'autres méthodes de mesure pour le revêtement de la bande.

4. Procédé selon les revendications 1 à 3, dans lequel l'unité d'évaluation est réalisée sous la forme d'un système à aulo-apprentissage et les fonctions de conversion stockées sont adaptées automatiquement à mesure que le nombre de processus traités augmente.

5. Procédé selon une des revendications 1 à 4, dans lequel le faisceau lumineux (11) est envoyé sur la surface à analyser sous un angle de 60° par rapport à la normale à la surface.

6. Procédé selon une des revendications 1 à 5, dans lequel l'unité d'évaluation (7) détermine la valeur de mesure comme moyenne de plus de 10 valeurs de valeurs de DELTA déterminées à partir de mesures individuelles du détecteur (13).

7. Procédé selon une des revendications 1 à 6, dans lequel un/le facteur de sélection est entré manuellement dans l'unité d'évaluation (7).

8. Procédé selon une des revendications 1 à 7, dans lequel un/le facteur de sélection est déterminé à partir d'une valeur de mesure d'un autre instrument de mesure.

9. Procédé selon une des revendications 1 à 8, dans lequel un/le facteur de sélection est déterminé sur la base de la mesure du détecteur (13) et/ou sur la base de la valeur de mesure déterminée dans l'unité d'évaluation (7).

10. Procédé selon une des revendications 1 à 9, dans lequel la fonction de conversion sélectionnée est un polynôme.

11. Procédé selon une des revendications 1 à 10, dans lequel la valeur de résultat est associée à une position déterminée de la bande par synchronisation avec une information sur la position de la bande.

12. Procédé selon une des revendications 1 à 11, dans lequel le faisceau lumineux (11) est dirigé sur une région de la bande métallique (2) dans laquelle la bande métallique repose sur un rouleau (3 ; 5).

13. Utilisation du procédé selon une des revendications 1 à 12 pour déterminer un revêtement de bande ayant une épaisseur de couche 1 à 100 nm.

14. Utilisation du procécé selon une des revendications 1 à 12 pour déterminer le revêtement sur une bande métallique (2) en mouvement, la bande métallique (2) se déplaçant à une vitesse comprise entre 50 et 3000 m/min.
